# EUROPÄISCHE PATENTANMELDUNG

(11) **EP 4 253 004 A1**
(43) Veröffentlichungstag der Anmeldung: **04.10.2023**
(21) Anmeldenummer: 23164090.5
(22) Anmeldetag: 24.03.2023
(51) Int. Cl.: B29C 64/106, B29C 64/379, B29L 31/00, B65B 5/02, B65B 59/00, B33Y 10/00, B33Y 40/00, B33Y 80/00

(54) **VERFAHREN ZUM VERSAND-VERPACKEN EINES PRODUKTES SOWIE UMHÜLLUNGS-VORRICHTUNG HIERFÜR**

(30) Priorität: 30.03.2022 DE 102022107581
(71) Anmelder: Völkl Patente GmbH & Co. KG, 83052 Bruckmühl (DE)
(72) Erfinder: Völkl, Thomas, 83052 Bruckmühl (DE)
(74) Vertreter: Weickmann & Weickmann PartmbB

(57) **Zusammenfassung**

Verfahren zum Versand-Verpacken eines Produktes (P) durch Umhüllen des Produktes (P) ohne umgebende Form mit einer aushärtbaren Verpackungs-Masse (1) und Aushärten der Verpackungs-Masse (1) am Produkt (P). Das Aufbringen der Verpackungs-Masse (1) erfolt in mehreren, ebenen Schichten (S1, S2) nacheinander, insbesondere in einem iterativen Verfahren.

## Beschreibung

### I. Anwendungsgebiet

Die Erfindung betrifft Verpackungen, insbesondere Versand-Verpackungen.

### II. Technischer Hintergrund

Hersteller von Produkten liefern diese in einer Primär-Verpackung, etwa einem Karton, aus, wobei das Produkt meist in einer formschlüssigen Produkt-Aufnahme, etwa einer an die Form des Produktes angepasst verformten Kunststoff-Folie oder Wanne aus Styropor, Schaumstoff, Papier oder Karton-Recyclingmaterial etc. aufgenommen ist.

Da der Hersteller eine große Anzahl immer gleich geformter Produkte verpacken muss, kann er eine große Anzahl solcher Produkt-Aufnahmen passgenau und dennoch kostengünstig herstellen lassen und als Primär-Verpackung benutzen.

Händler, insbesondere Online-Händler, die die unterschiedlichsten Produkte über Paket-Logistiker an den Besteller liefern müssen, müssen dieses - in aller Regel bereits primär verpackte - Produkt zusätzlich mit einer Versand-Verpackung umgeben, auf der die notwendigen Paket-Informationen, beispielsweise das Etikett, angebracht werden kann und gegen mechanische Belastungen besser schützt als die Primär-Verpackung alleine.

Dabei müssen häufig außer dem einen Produkt entweder weitere vom gleichen Besteller bestellte Produkte oder vom Händler hinzuzufügende Sekundär-Produkte, wie etwa Begleitpapiere, Rücksendeformulare, Rechnung und ähnliches in der Versand-Verpackung mit aufgenommen werden.

Eine solche Versand-Verpackung besteht derzeit meist aus einem Versand-Karton. Das grundsätzliche Problem besteht darin, dass der versendende Händler nur eine begrenzte Anzahl unterschiedlicher Größen von solchen Versand-Kartons vorhalten kann, die aber auf die vielen verschieden großen und verschieden geformten, zu versendenden Produkte nicht optimal angepasst sind, sodass die Versand-Verpackung nicht selten das vielfache Volumen der darin enthaltenen Produkte aufweist.

Dies erfordert wiederum Füllstoffe wie Luftpolster-Folien oder Packpapier oder Styropor-Chips, die meist aus einem anderen Material als die Versand-Verpackung bestehen und ergibt ein unnötig großes Transport-Volumen.

Zusätzlich erfolgt die Auswahl der Versand-Verpackung hinsichtlich ihrer Art und Größe, das Füllen der Versand-Verpackung sowie Schließen und Etikettieren in der Regel von Hand, und ist somit grundsätzlich teuer und fehleranfällig.

Andererseits haben gerade große Versand-Händler eine ausreichende Menge an Paketen pro Tag, um eine teilweise Automatisierung schnell zu amortisieren.

### III. Darstellung der Erfindung

### a) Technische Aufgabe

Es ist daher die Aufgabe gemäß der Erfindung, ein Verfahren zum Umhüllen eines Produktes mit einer Versand-Verpackung sowie eine diesbezügliche Umhüllungs-Vorrichtung zur Verfügung zu stellen, mit denen Produkte schnell, kostengünstig und mit geringem oder keinem manuellen Arbeitsaufwand versandfertig verpackt werden können.

### b) Lösung der Aufgabe

Diese Aufgabe wird durch die Merkmale der Ansprüche 1 und 12 gelöst. Vorteilhafte Ausführungsformen ergeben sich aus den Unteransprüchen.

Hinsichtlich des Verfahrens wird diese Aufgabe dadurch gelöst, dass das Produkt mit einer aushärtbaren Verpackungs-Masse umhüllt wird, die im ausgehärteten Zustand die Versand-Verpackung bildet.

Dabei erfolgt das Aufbringen der Verpackungs-Masse vorzugsweise schichtweise, vorzugsweise in ebenen aufeinanderfolgenden Schichten.

Denn der Vorteil des Aufbringens einer Verpackungs-Masse, insbesondere in einzelnen Schichten, liegt gerade darin, dass hierfür keine das Produkt umgebende Form benötigt wird, und mit der Verpackungs-Masse lediglich die Hohlräume zwischen Produkt und umgebender Form ausgegossen werden, sondern die Verpackungs-Masse wird ohne äußere, umgebende Form lediglich auf der Basisplatte aufgebracht und dennoch sollen die einzelnen Schichten an ihren Rändern nicht verlaufen, also herunterlaufen.

Die geometrischen Hauptebenen der Schichten werden dabei in aller Regel das abzupackende Produkt schneiden und nur bei den untersten und obersten Schichten am Produkt vorbei verlaufen und/oder ggfs. parallel zu einem Oberflächenbereich des Produktes verlaufen.

Natürlich wäre auch ein schalenförmiger, schichtweiser Aufbau radial von innen nach außen bzgl. des Produktes möglich, jedoch erfordert dies eine aufwendige Handhabung des Produktes, während ein schichtweiser Aufbau um das stillstehende Produkt herum mit weniger mechanischem Aufwand möglich ist, beispielsweise in einem iterativen Verfahren wie dem 3D-Druck.

Für das Aufbringen sollte die Masse spritzfähig sein, sodass sie durch eine Ausbringungs-Düse leicht und dosiert sowie zielgerichtet ausgebracht werden kann.

Hinsichtlich des Aushärtungs-Fortschrittes ist es dabei in aller Regel ausreichend, dass für das Aufbringen einer nächsten Schicht die darunterliegende Schicht zumindest soweit angehärtet ist, dass sie das Gewicht der darauf aufzubringenden neuen Schicht tragen kann, ohne sich selbst nennenswert zu verformen.

Vorzugsweise sollte die Aushärtezeit der Verpackungs-Masse einstellbar sein, beispielsweise durch Auswahl von Art und Menge des in der Masse enthaltenen oder unmittelbar vor dem Ausbringen der Masse zu gegebenen Klebers.

Dadurch können einerseits die Formgenauigkeit der Versand-Verpackung, andererseits die Schichtdicke und die Aufbauzeit der Umhüllung gesteuert werden.

Vorzugsweise ist die Verpackungs-Masse nicht expandierend, behält also nach dem Ausbringen aus der Aufbringungs-Düse ihr Volumen - bis auf Abweichungen von unter 5 %, vorzugsweise unter 3 % - sodass die Gestaltung der fertigen Versand-Verpackung sehr genau gesteuert werden kann, und auch das Ausüben unerwünschten Druckes durch eine starke Volumenvergrößerung der Masse wie bei expandierenden Schäumen oder Massen auf das Produkt vermieden werden kann.

Vorzugsweise besteht die Verpackungs-Masse großenteils aus recyceltem Papier- oder Karton-Material, was die Entsorgung und das Recyceln der Versand-Verpackung erleichtert. Im Idealfall handelt es sich dabei um eine nach dem Aushärten kompostierbare Verpackungs-Masse.

Das Ziel besteht also darin, möglichst wenig Verpackungs-Masse um das Produkt herum aufzubringen, gerade eben so viel, dass das zu versendende Produkt ausreichend gegen Erschütterungen, Nässe und andere Umwelteinflüsse geschützt ist.

Ein Problem bei einer auf diese Art und Weise automatisierten Verpackung des Produktes besteht darin, wie die Unterseite einer solchen Versand-Verpackung hergestellt wird.

Eine erste Methode besteht darin, eine stabile, eventuell mehrlagige, Kartonplatte als Bodenplatte zu benutzen und auf diese das zu verpackende Produkt oder die mehreren zu verpackenden Produkte aufzulegen.

Anschließend können um das Produkt herum nacheinander Schichten der Verpackungs-Masse aufgebracht werden, wobei die Schichten parallel zu der Basisplatte liegen werden.

Um die Verbindung der ersten Schicht oder der ersten Schichten der Verpackungs-Masse mit der Basisplatte bestehend aus der, insbesondere stabilen, Kartonplatte zu optimieren, kann letztere nach oben vorstehende, vorzugsweise schräg stehende oder durchbrochene, Fortsätze aufweisen, gegenüber denen sich die Verpackungs-Masse der nächsten Schichten formschlüssig verkrallen kann.

Auf diese Art und Weise können Schichten aufgebracht werden, bis das Produkt mit Verpackungs-Masse überdeckt ist.

Da auch solche Bodenplatten nicht in beliebig vielen Größen vorgehalten werden können oder sollen, kann die benötigte, auf die Größe des zu übertragenen Produktes abgestimmte, Größe einer Bodenplatte aus einer nächstgrößeren, bevorrateten Größe zugeschnitten oder ausgeschnitten werden, vorzugsweise unmittelbar vor dem Auflegen auf die Aufbringungsfläche.

Eine zweite Methode besteht darin, auf einer Aufbringungsfläche zunächst eine oder mehrere Schichten der Verpackungs-Masse aufzubringen und erst dann auf der auf diese Art hergestellten Basisplatte das eine oder die mehreren zu verpackenden Produkte aufzulegen und dann fortzuschreiten wie bei einer Basisplatte aus Karton-Material, also durch Aufbringen weiterer Schichten um das Produkt herum.

Eine dritte Methode besteht darin, das Produkt direkt auf eine Aufbringungsfläche aufzulegen und dann wiederum schichtweise um das Produkt herum die Verpackungs-Masse aufzubringen bis das Produkt vollständig davon bedeckt ist.

Nach ausreichendem Anhärten der obersten Schicht kann das Produkt zusammen mit dem bereits hergestellten oberen Teil der Versand-Verpackung - auch automatisch von einem Greifer - um 180° gewendet werden, sodass die noch sichtbare Unterseite des Produktes danach nach oben ragt, und auf die nun oben liegende, ursprünglich erste aufgebrachte Schicht an Verpackungs-Masse nun weitere Schichten aufgebracht werden, sodass auch die Unterseite des Produktes vollständig mit Verpackungs-Masse bedeckt ist und in einer solchen Dicke, dass das Produkt nach dem Aushärten auch auf dieser Seite ausreichend geschützt ist.

Dies ergibt also bereits eine Seite, auf die beispielsweise ein Empfänger-Etikett gut aufgebracht werden kann. Für den Rest des Umfanges der Verpackung ist es dann ausreichend, wenn eine ausreichend schützende Schicht um das Produkt herum aufgebracht wird, was Material spart.

Ferner hätte dies den Vorteil, dass dem Auslieferung-Fahrer auf seiner Auslieferung-Liste nicht nur die ungefähre Größe, sondern auch die Form des Paketes grafisch dargestellt werden könnte, und er damit viel schneller als bisher das Paket in seiner Lieferwagen-Ladung finden könnte.

Es kann jedoch auch von der Handhabung her vorteilhaft sein, wenn die fertige Versand-Verpackung nicht nur eine ebene Unterseite, sondern auch eine ebene Oberseite besitzt und zu diesem Zweck vorzugsweise auch die letzte aufgebrachte Schicht eine ebene Oberseite besitzt.

Sofern auch die Unterseite der fertigen Versand-Verpackung eben ist, und vorzugsweise parallel zur Oberseite, erleichtert dies enorm das Stapeln solcher Versand-Verpackungen, auch wenn die in der Aufsicht betrachtete Grundfläche der Versand-Verpackung nicht rechteckig sein muss, um die Menge an Verpackungs-Masse zu reduzieren.

Dabei wird die ebene Oberseite und/oder ebene Unterseite zum Aufbringen der Paket-Informationen, insbesondere durch Aufkleben eines damit bedruckten Etiketts, verwendet werden.

Insbesondere zu diesem Zweck kann auf die ebene Oberseite der obersten Schicht aus Verpackungs-Masse ebenfalls eine Karton-Platte aufgebracht und mit der noch nicht ausgehärteten Masse verbunden werden.

Dabei kann wie bei der unteren Karton-Platte durch Fortsätze eine bessere Fixierung erreicht werden, die sich in die noch nicht ausgehärtete Verpackungs-Masse hinein erstrecken und gegenüber dieser formschlüssig verkrallen, etwa in dem diese obere Karton-Platte von oben auf und in die oberste Schicht aus der Verpackungs-Masse aufgedrückt wird und die Fortsätze eingedrückt werden.

Eine solche obere oder untere Karton-Platte kann bereits vor dem Anbringen an der Versand-Verpackung mit den Paket-Informationen versehen worden sein, oder dies erfolgt nach Herstellung der Versand-Verpackung.

Unabhängig von der von der Versand-Verpackung ist es mit Hilfe eines iterativen Aufbringungs-Verfahrens auch leicht möglich, Hohlräume in der Versand-Verpackung auch abseits des primär zu verpackenden Produktes vorzusehen.

Ein Grund hierfür kann sein, dass in dem Hohlraum Sekundär-Produkte, also nicht mit dem Produkt verbundene und auch nicht zusammen mit dem Produkt in einem Beutel befindliche, separate Einzelteile darstellen, eingelegt werden können.

Ferner kann bei Frischware als Produkt in einen solchen Hohlraum beispielsweise ein Kälte-Akku eingelegt werden, den man zwar auch direkt mit dem Produkt kontaktieren einlegen könnte, beispielsweise das Produkt darauf legen könnte,, insbesondere mit der Bodenplatte aus Karton darunter ein, aber je nach Empfindlichkeit des Produktes ist in der Regel eine spezifisch gestaltete Trennwand zwischen Kälte-Akku und Frischware sinnvoll, wobei die Trennwand hinsichtlich Dicke und damit Isolierwirkung, das Vorhandensein von Durchgangsöffnungen nach Anzahl und Größe in der Trennwand usw. bei einem iterativen Aufbringungsverfahren leicht individuell und abhängig von Art und Menge der Frischware festgelegt werden kann.

Ein anderer Grund kann sein, dass diese Hohlräume vorgesehen werden, um das Gewicht der Versand-Verpackung niedrig zu halten, beispielsweise, wenn bei deinem unregelmäßig geformten Produkt die Versand-Verpackung dennoch eine kubische Außenkontur aufweisen soll.

Solche Hohlräume können an ihrer Oberseite geschlossen werden, indem eine Abdeckplatte, beispielsweise wiederum in Form einer Karton-Platte, darübergelegt wird, bevor die nächste Schicht aus Verpackungs-Masse aufgebracht wird. Sie kann aber auch verschlossen werden, indem der Umfang der Öffnung jeder folgenden Schicht aus Verpackungs-Masse am oberen Ende der Öffnung immer kleiner wird, bis die Öffnung geschlossen ist, wenn hierfür ausreichend Bauhöhe zur Verfügung steht.

Sowohl das Einlegen von Sekundär-Produkten als auch das Auflegen einer Abdeckplatte als auch einer oberen Endplatte kann automatische erfolgen.

Ein dafür notweniger Greifer oder Picker kann auch am gleichen Führungssystem wie die Ausbringungsdüse geführt sein, insbesondere an der Düsen-Basis der vertikal beweglichen Ausbringungsdüse befestigt sein und sich demgegenüber selbst vertikal gesteuert bewegen.

Für das Umhüllen des Produktes können auch mehrere verschiedene Verpackungs-Massen benutzt werden, beispielsweise mit unterschiedlichen physikalischen Eigenschaften, insbesondere unterschiedlicher Elastizität und/oder unterschiedlichem spezifischen Gewicht.

So können die Bereiche der Versand-Verpackung, die unmittelbar an das Produkt angrenzen, aus einer im ausgehärteten Zustand besonders elastischen Verpackungs-Masse hergestellt werden, die weiter außen liegenden Bereiche dagegen aus einem weniger elastischen, dafür härterem und weniger leicht zu beschädigendem Material.

Die im Vergleich zur übrigen Verpackungs-Masse - im ausgehärteten Zustand - härtere Massekann beispielsweise auch zum Herstellen von in ihrer Haupterstreckung sehr druckstabilen Verstrebungen benutzt werden, die entweder umgeben von der anderen Verpackungs-Masse in die Versand-Verpackung eingearbeitet werden oder die sich durch innere Hohlräume der Versand-Verpackung erstrecken können, wenn es sich dabei um Hohlräume handelt, die primär der Gewichtsreduzierung dienen, sodass dadurch eine leichte und dennoch sehr stoßfeste auf die Form des jeweiligen Produktes abgestimmte, Versand-Verpackung hergestellt werden kann.

Vorzugsweise werden solche Verstrebungen primär radial zum Produkt verlaufen.

Nicht nur das spezifische Gewicht, sondern auch die Elastizität der ausgehärteten Verpackungs-Masse kann unter Umständen durch den Grad der Porosität der ausgehärteten damit in der Regel auch schon der aufgebrachten, noch nicht ausgehärteten Verpackungs-Masse gesteuert werden.

Deshalb kann vorzugsweise - spätestens beim Ausbringen der Verpackungs-Masse aus der Ausbringungs-Düse - ein Gas fein verteilt zugesetzt werden, welches die gewünschte Porosität schafft.

Des Weiteren kann für ein leichteres Öffnen der Versand-Verpackung eine Sollbruch-Stelle darin vorgesehen werden, beispielsweise eine linienförmig um die Außenkontur der Versand-Verpackung umlaufenden Sollbruch-Linie, die vorzugsweise außen markiert ist, etwa durch eine umlaufende Kerbe in der Außenseite der Versand-Verpackung.

Dabei kann die Sollbruch-Stelle, insbesondere die linienförmige Sollbruch-Stelle, vorzugsweise so angeordnet werden, dass beim Öffnen mittels eines Messers durch Entlangschneiden entlang der linienförmigen Sollbruch-Stelle das Produkt gerade nicht beschädigt werden kann.

Hinsichtlich der Umhüllungs-Vorrichtung wird die bestehende Aufgabe dadurch gelöst, dass hierfür ein 3D-Drucker verwendet wird, dessen Ausbringungsdüse geeignet ist zum Ausbringen einer aushärtbaren Verpackungs-Masse, auch wenn diese aus recyceltem Papier- oder Karton-Material besteht und daher in aller Regel keine homogene Masse ist, sondern Flocken oder Fasern enthält.

Sofern die Umhüllung nach der oben beschriebenen dritten Methode erfolgt, umfasst die Umhüllungs-Vorrichtung eine Wende-Vorrichtung zum Wenden des bereits teilweise von ausgehärteter Verpackungs-Masse umgebenen Produktes.

Falls Karton-Platten aufgelegt werden müssen - sei es auf der Aufbringungs-Fläche als Basisplatte oder der bereits teilweise hergestellten Versand-Verpackung als Abdeckplatte oder auf der fertig hergestellten Versand-Verpackung als obere Endplatte - umfasst die Umhüllungs-Vorrichtung auch einen Greifer oder Picker, der in der Lage ist, solche Platten oder auch Sekundär-Produkte von einem abseits liegenden Vorrat auf die auf der Aufbringungs-Fläche herzustellenden oder bereits teilweise hergestellten Versand-Verpackung automatisch, positionsgenau und gesteuert umzusetzen.

Vorzugsweise besteht die Aufbringungs-Fläche aus der Oberseite des Förderbandes eines Produkt-Förderers, mit dem das Produkt oder die auf einem solchen Förderer aufgelegte Basisplatte samt darauf aufliegendem Produkt in den Arbeitsbereich des 3D-Druckers gefahren und nach Fertigstellung, beispielsweise zum Etikettieren oder Aufbringen der oberen Abschlussplatte, aus diesem vorzugsweise in der Gegenrichtung hinaus verfahren werden kann.

### c) Ausführungsbeispiele

Ausführungsformen gemäß der Erfindung sind im Folgenden beispielhaft näher beschrieben. Es zeigen:
- **Figuren 1a** - **g:**: eine Umhüllungs-Vorrichtung für Produkte in der Seitenansicht in unterschiedlichen Stadien der Umhüllung,
- **Figuren 2a** - **f:**: die Umhüllungs-Vorrichtung gemäß der Figuren 1 in der Aufsicht von oben in etwa den gleichen Zuständen der Umhüllung des Produktes,
- **Figuren 3a** - **g:**: eine Umhüllungs-Vorrichtung ähnlich der der Figuren 1 und ebenfalls in der Seitenansicht, jedoch in unterschiedlichen Zuständen bei einem anderen Verfahren zum Aufbau der Umhüllung,
- **Figuren 4a** - **d:**: eine Umhüllungs-Vorrichtung ähnlich der der Figuren 1 und ebenfalls in der Seitenansicht, jedoch in unterschiedlichen Zuständen bei einem anderen Verfahren zum Aufbau der Umhüllung.

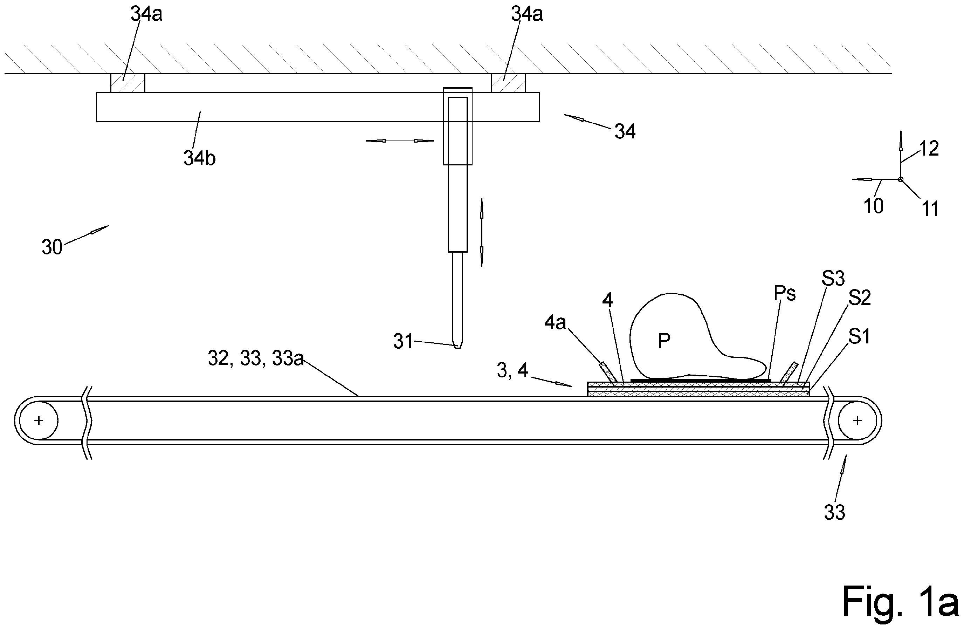

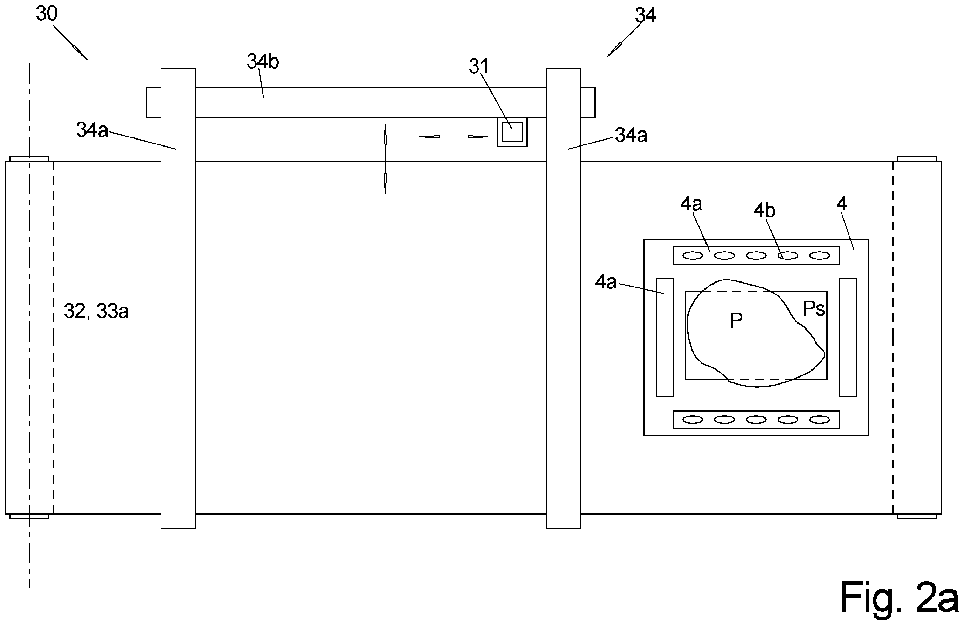

Wie aus den **Figuren 1a** und **2a** zu erkennen, besteht die Umhüllung-Vorrichtung zum einen aus einer Aufbaufläche 32, auf der die Produktumhüllung schichtweise aufgebaut wird, in diesem Fall in Form der Oberseite des Obertrums eines Förder-Bandes 33a eines Produkt-Förderers 33, mit dem das Produkt P in den Wirkbereich einer Ausbringungs-Düse 31 gebracht werden kann, aus der die noch nicht ausgehärtete Verpackungsmasse 1 nach unten ausgebracht werden kann.

Zu diesem Zweck ist die Ausbringungsdüse 31 in der Höhe gesteuert verfahrbar an einer Düsenführung 34 befestigt, die zwei im Abstand zueinander in Querrichtung zur Transportrichtung 10 des Produkt-Förderers 33 verlaufende Quer-Führungen 34 umfasst, über die hinweg eine Längs-Führung 34b und in Querrichtung gesteuert beweglich gegenüber den Querführungen 34a befestigt ist.

An dieser Längsführung 34b, hier einen Führungsbalken, der in Transportrichtung 10 verläuft, ist ein Düsenhalter gesteuert verfahrbar in Längsrichtung 10 befestigt, gegenüber dem die Ausbringungs-Düse 31 auch in der Höhe gesteuert verfahrbar ist. Dadurch kann die Ausbringungsdüse 31 an jeder Stelle ihres in der Aufsicht betrachteten Arbeitsbereiches gebracht und dort in den richtigen Abstand zur bereits vorhandenen Unterlage oder letzten vorangehenden Schicht an Verpackungsmasse 1 gebracht werden, um ein definiertes ausbringen eines nächsten Stranges aus der Ausbringung-Düse 31 vorzunehmen

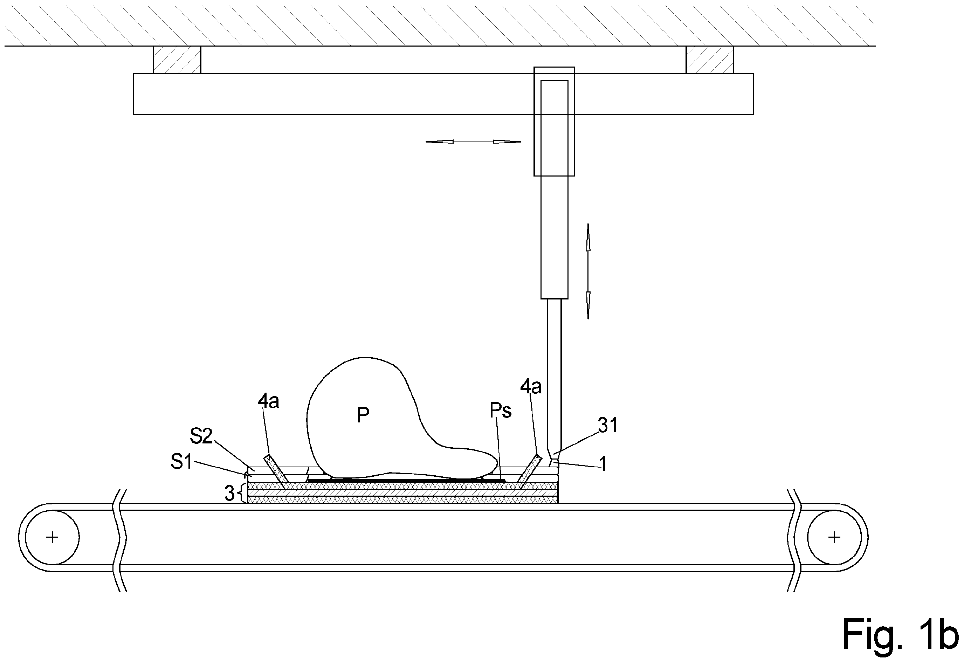

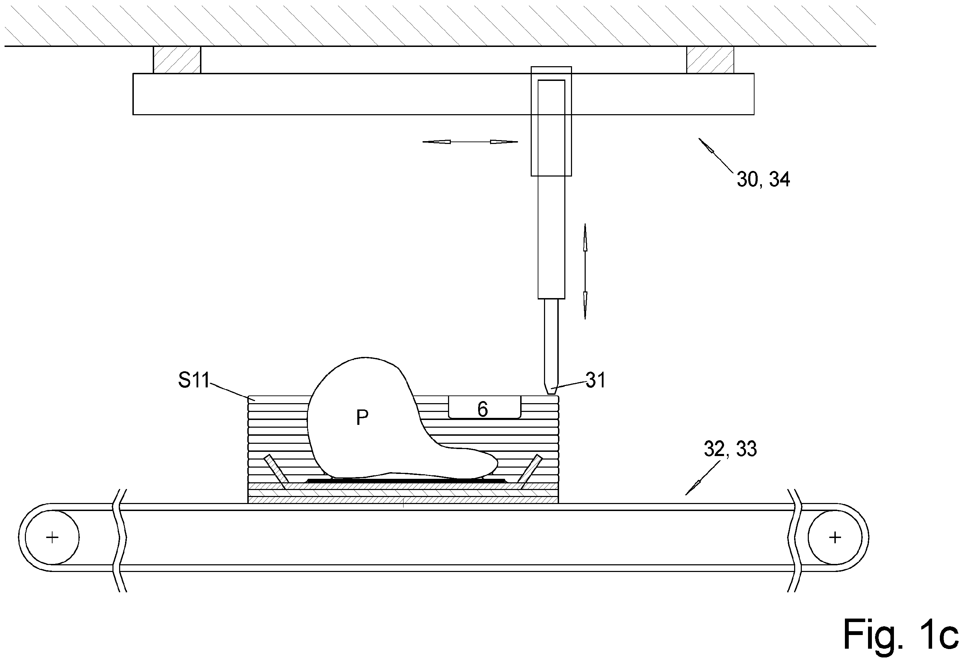

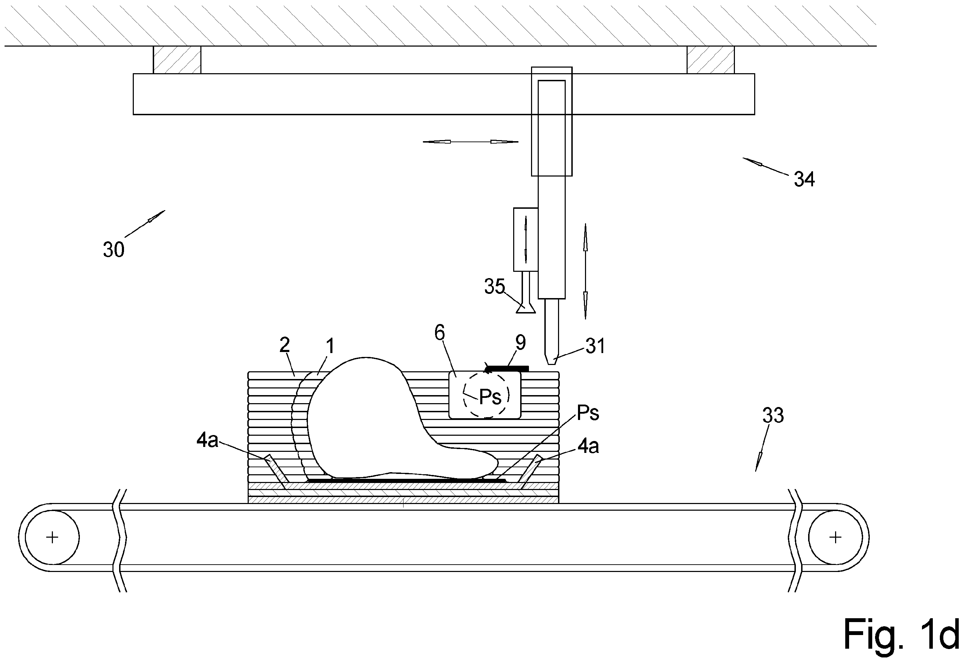

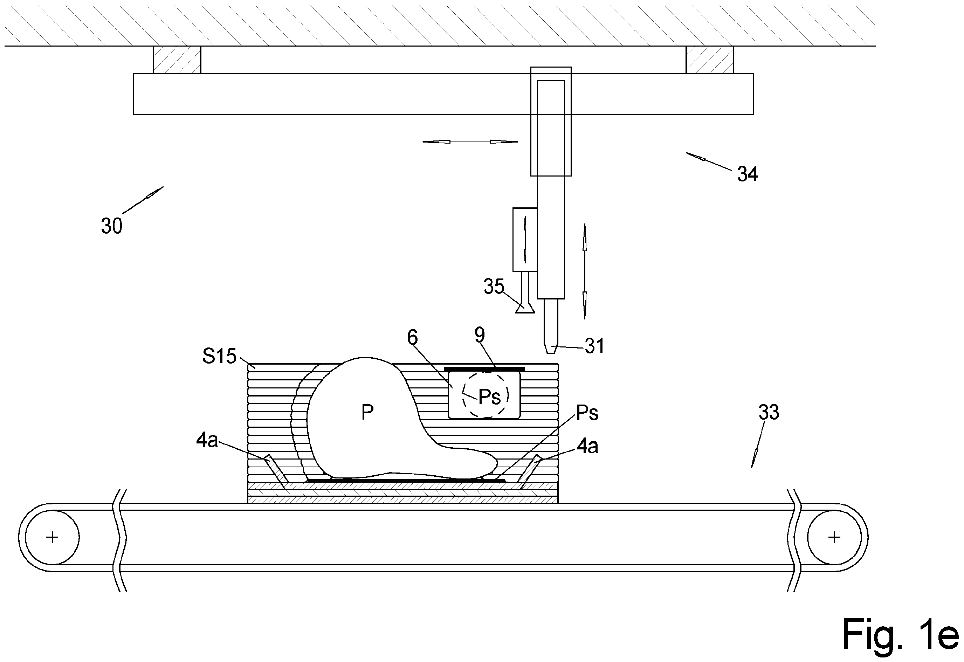

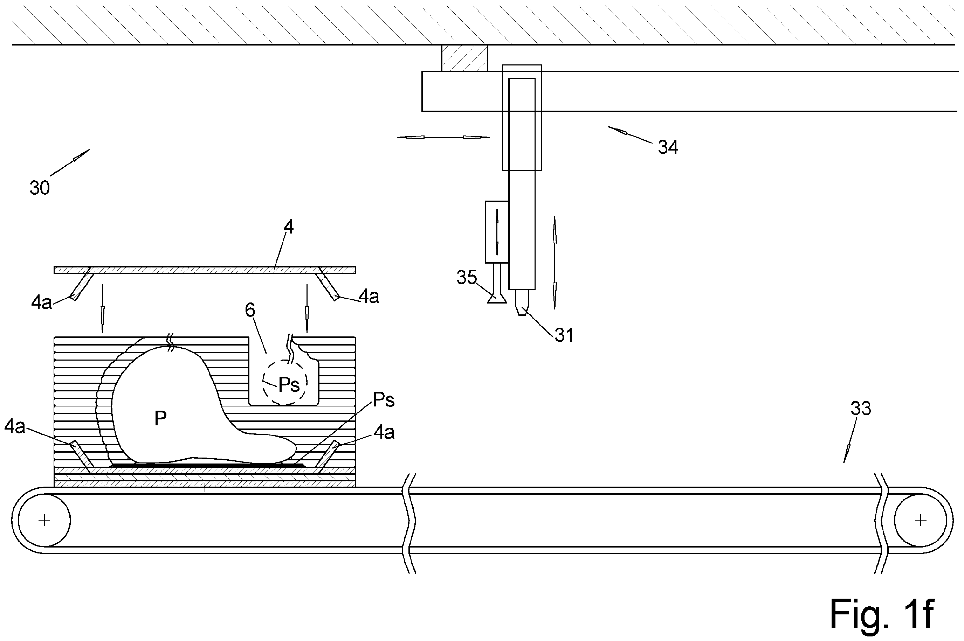

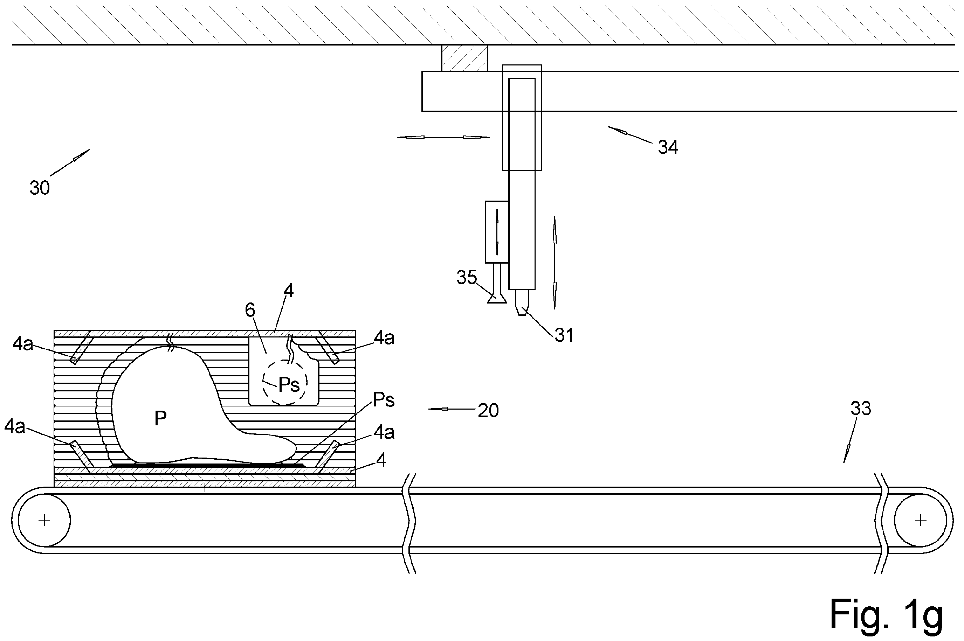

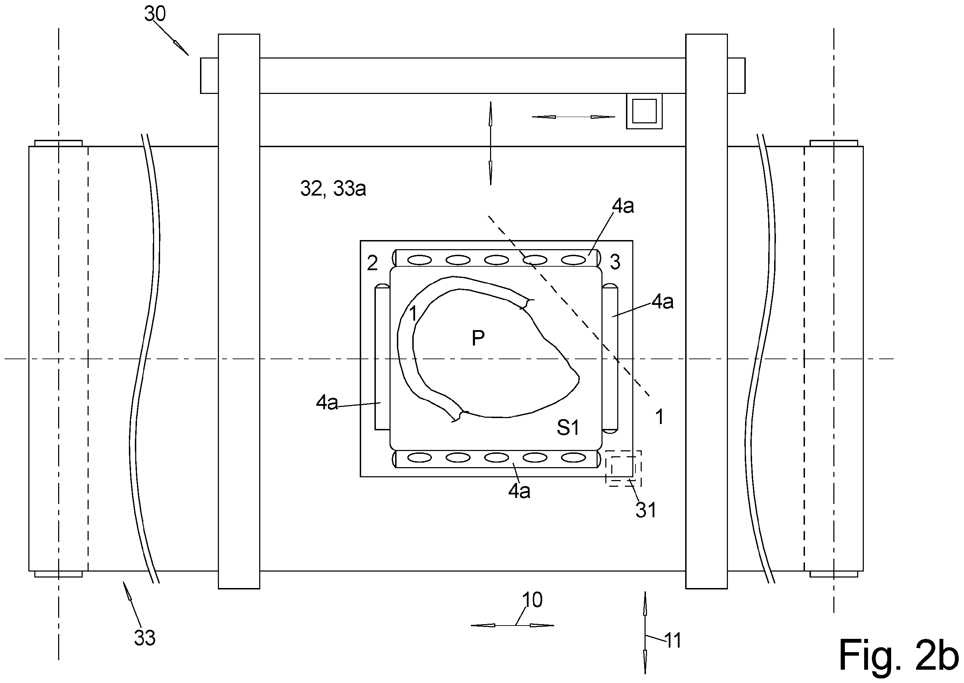

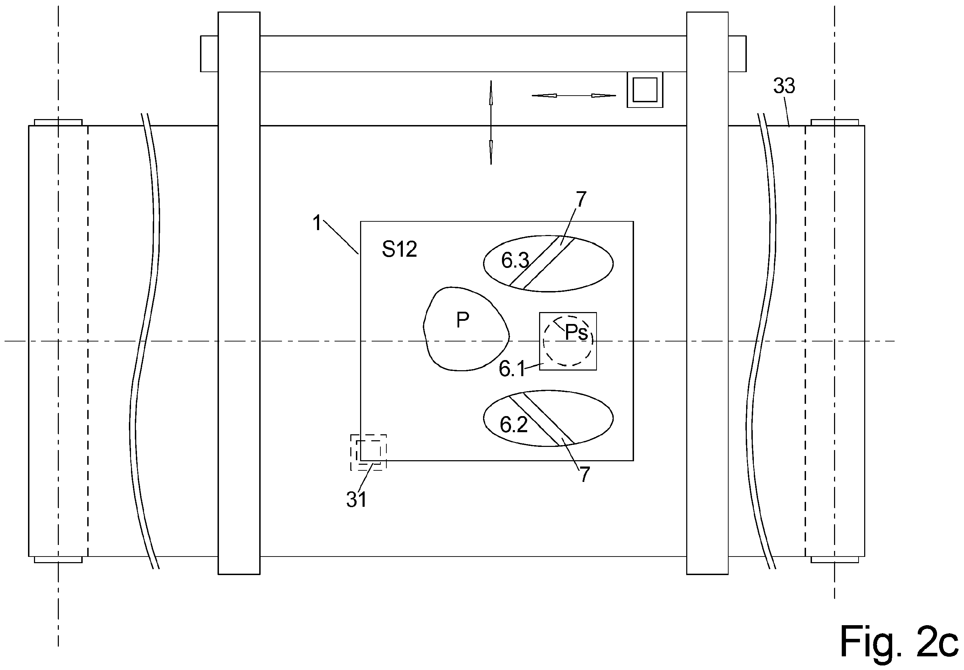

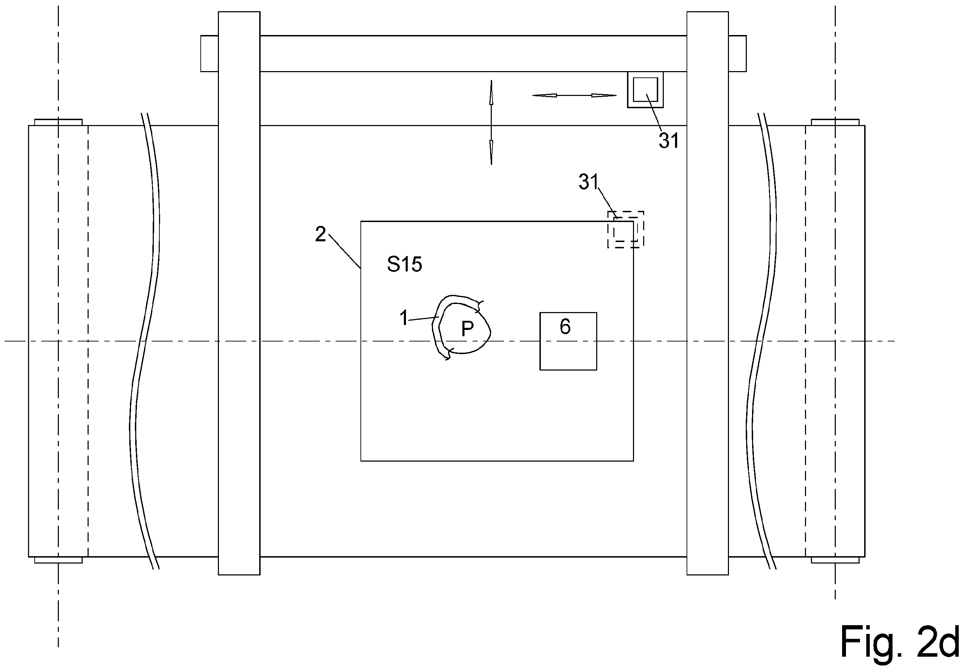

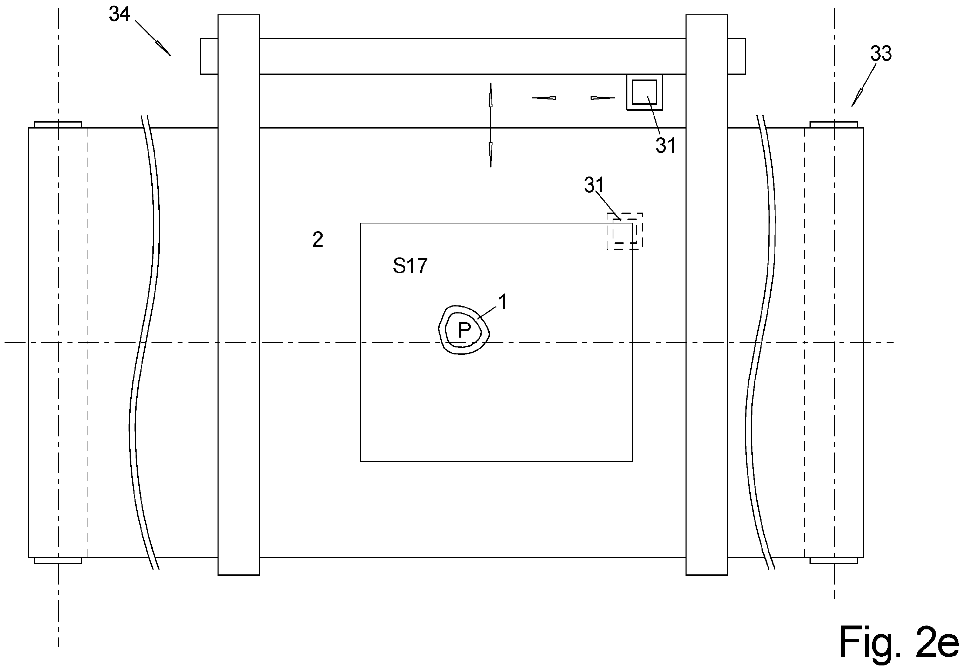

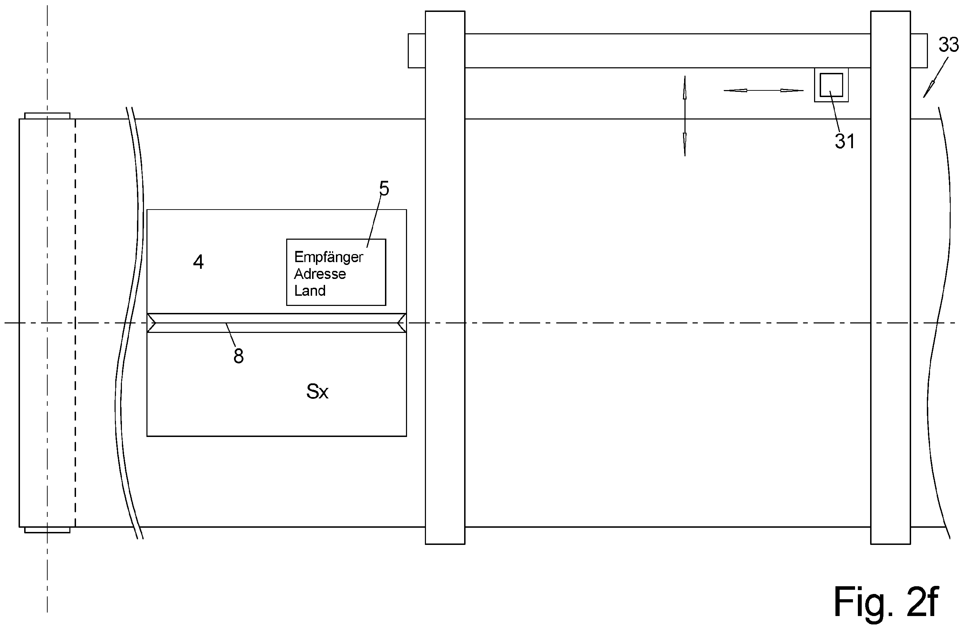

Die **Figuren 1** und **2** zeigen ein Umhüllungs-Verfahren, bei dem aus der Ausbringungs-Düse 31 eine aushärtbare, schlagabsorbierende und thermisch isolierende Verpackungsmasse 1, vorzugsweise aus Papier-Werkstoffen, ausgebracht wird, die das Produkt P am Ende vollständig umhüllt und nach Aushärten eine Transport-Verpackung für das Produkt P darstellt.

Das Produkt P ist dabei vorzugsweise in einer dünnen Kunststofftüte oder Kunststofffolie oder auch einer Feuchtigkeits-festen Papierhülle eng umschlossen aufgenommen, damit die aufgebrachte Verpackungs-Masse nicht direkt am Produkt P anhaften kann.

Beim Herstellen der Verpackungs-Umhüllung nach der Methode der **Figuren 1** und **2** wird damit begonnen, dass eine Basisplatte 3 auf den Produkt-Förderer 33 abseits des Arbeitsbereichs der Ausbringungs-Düse 31 aufgelegt wird, und darauf das Produkt P (siehe Figur 1a, 2a) und beides zusammen durch gesteuertes Antreiben des Produkt-Förderers 33 anschließend in den Arbeitsbereich der Ausbringungs-Düse 31 gebracht und dort mit dem schichtweisen Aufbringen der Verpackungs-Masse 1 begonnen wird, siehe ab **Figuren 1b****,** **2b****.**

Die Basisplatte 3 besteht in diesem Fall aus drei miteinander verklebten Karton-Platten 4, wobei aus der obersten Karton-Platte 4 Befestigungs-Laschen 4a ausgestanzt und hochgebogen sind, vorzugsweise beabstandet zum außen umlaufenden Rand, und in den Befestigungs-Laschen 4a vorzugsweise auch Durchbrüche oder Vertiefungen 4b enthalten sind, die der formschlüssigen Verhakung mit der später aufgebrachten Verpackungs-Masse dienen.

Es versteht sich von selbst, dass die für das Produkt P ausgewählte Basisplatte 3 in der Aufsicht betrachtet zwar größer als das Produkt P sein soll, aber nur so viel größer, dass bei einem Schichtaufbau, dessen Ränder dem in der Aufsicht betrachteten Rändern der Basisplatte 3 entsprechen, die Wandstärke der späteren fertigen Verpackungs-Hülle 20 nicht wesentlich größer als eine für die Stabilität der Verpackung notwendige Mindest-Dicke ist.

Da die Basisplatten in der Aufsicht betrachtet in der Regel rechteckig sind, kann bei einem sehr unsymmetrischen, etwa birnenförmigen Produkt P wie dargestellt, auch vor dem Aufsetzen auf die Aufbaufläche 32 ein Eckbereich der Basisplatte 3 abgeschnitten werden.

Bei einem Hersteller, der selbst Produkte herstellt und verpackt, wird dieser in der Regel an seine einzelnen Produkte angepasste Basisplatten 3 verwenden.

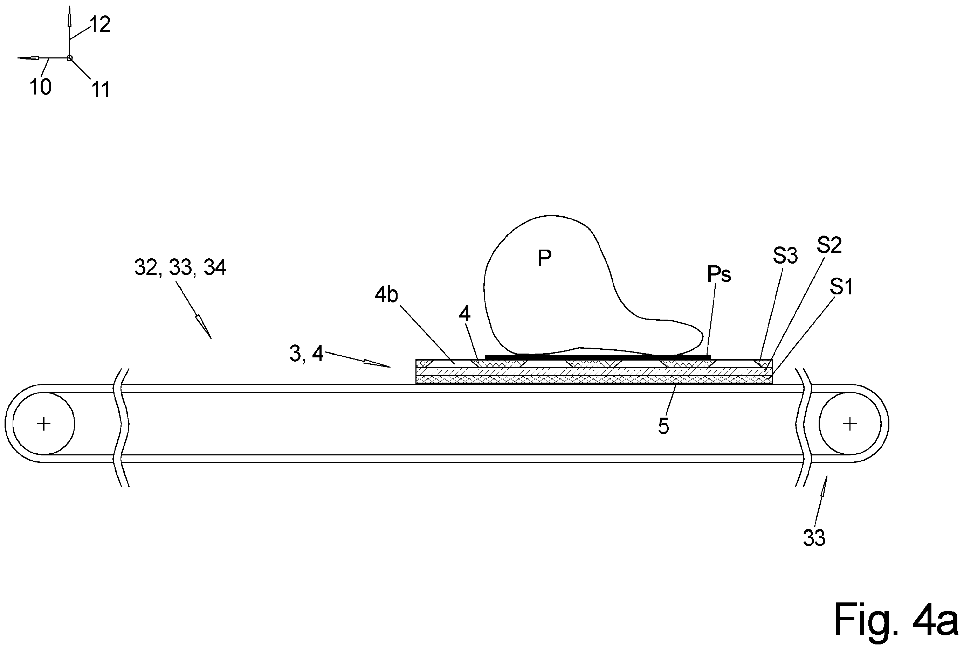

Da die Basisplatte 3 eine der Seiten der fertigen Verpackungs-Hülle darstellt, kann auf ihrer Unterseite auch vor dem Auflegen auf der Aufbaufläche 32 ein Etikett 5 mit den notwendigen Paket-Informationen, insbesondere Name und Adresse des Empfängers, aufgeklebt werden, wie in **Figur 4a** dargestellt.

Ebenso kann vor dem Auflegen oder zusammen mit dem Auflegen des Produktes P zwischen Produkt P und der Oberseite der Basisplatte 3 ein Sekundär-Produkt Ps, etwa die Bedienungsanleitung, angeordnet werden, die sich beispielsweise zusammen mit dem Produkt P in einer dünnen Kunststoffhülle befinden kann.

Zum Aufbau der ersten Schicht S1 wird anschließend die Ausbringungs-Düse 31 auf den hierfür richtigen Abstand zur Oberseite der Basisplatte 3 - abseits der Befestigungs-Laschen 4a - gebracht und eine durchgehende Schicht S1 aus Verpackungs-Masse 1 auf der Oberseite der Basisplatte 3 bis zu deren Rändern hin aufgebracht, bzgl. der Befestigungs-Laschen 4a sowohl radial außerhalb als auch radial innerhalb dieser Befestigungs-Laschen, wobei in **Figur 2b** mit dem Aufbau der Schicht S1 auf der radial inneren Seite begonnen wurde und radial außen um die Befestigungs-Laschen 4a herum noch kein Material aufgebracht ist.

So werden nacheinander eine zweite Schicht - wie in **Figur 1b** dargestellt - und danach weitere Schichten um das Produkt P herum aufgebaut, wobei in **Figur 1c** der Zustand bis einschließlich der elften Schicht S11 dargestellt ist, die etwa auf der halben oder zwei Drittel der Höhe des Produktes P liegt.

Wie zu erkennen befinden sich die Ränder einzelnen Schichten fluchtend übereinander, sodass ausgehend von einer in der Aufsicht rechteckigen Basisplatte 3 der entstehende Verpackungs-Block ebenfalls rechteckig wird.

Das Aushärten der Verpackungs-Masse 1 erfolgt so schnell, dass bereits am Beginn des Anordnens der nächsten Schicht die vorherige Schicht an dieser Stelle - mit der bei der Schicht vorzugsweise zuvor ebenfalls begonnen wurde - soweit angehärtet ist, dass diese Schicht zwar nicht mehr durch das Gewicht der oberen Schicht zusammengedrückt wird, aber noch so wenig ausgehärtet ist, dass sich beide Schichten innig miteinander verbinden.

**Figur 1c** zeigt, wie im Schichtaufbau abseits des Produktes auch ein Hohlraum 6 freigelassen werden kann, in den bei Bedarf - siehe **Figur 1d** - auch ein weiteres Sekundär-Produkt Ps eingelegt werden kann, beispielsweise ein elektrisches Kabel.

**Figur 2c** zeigt in der Aufsicht von oben, dass abseits des Produktes sogar mehrere wannenförmige Hohlräume 6.1 bis 6.3 erzeugt wurden, wovon nur in den einen Hohlraum 6.1 ein Sekundär-Produkt Ps vor dem Verschließen dieses Hohlraumes 6.1 nach oben eingelegt wurde, die anderen Hohlräume dagegen der Gewichtsreduzierung und Materialersparnis dienen, um trotz ausreichender Stabilität bei einem sehr unsymmetrischen Produkt P eine gut handhabbare quaderförmige fertige Produkt-Verpackung 20 zu erzeugen.

Dabei können durch solche Hohlräume 6.2, 6.3 hindurch verlaufend auch Verstrebungen 7 aus der Verpackungs-Masse mit eingebaut werden, um eine ausreichende Stabilität der fertigen Verpackungs-Hülle zu gewährleisten.

**Figur 1d** zeigt ferner, dass auch mit unterschiedlichen Verpackungs-Massen 1 und 2 oder mehr gearbeitet werden kann:
So kann zunächst ein Schichtaufbau nur eng um das Produkt P herum und nicht bis zu den Rändern der Basisplatte 3 erfolgen aus einer ersten, beispielsweise relativ weichen und auch im ausgehärteten Zustand noch elastischen Verpackungs-Masse 1, was besonders bei sehr empfindlichen Produkten P Sinn macht, um die herum dann als zweite Schicht eine im ausgehärteten Zustand wesentlich stabilere und weniger elastische Schicht aus Verpackungs-Material 2 angeordnet werden kann, die sich dann bis zu den in der Aufsicht betrachteten Rändern der Basisplatte 3 nach außen erstreckt.

Um den Hohlraum I z.B. Hohlraum 6, auf der Oberseite zu verschließen, kann nach Einlegen des Sekundär-Produktes Ps eine Abdeckplatte 9 darübergelegt werden, die beispielsweise mittels eines an der Düsen-Halterung befestigten und in der Höhe verfahrbaren Pickers 35, etwa eines Saugers, automatisch aus einem Vorrat abgeholt und aufgelegt werden kann, ebenso wie vorher auch das Sekundär-Produkt Ps, solange sich der Vorrat im Greifbereich des Pickers und damit der Düsen-Führung 34 befindet, die zu diesem Zweck beispielsweise in Querrichtung weiter über das Förder-Band 33 hinaus überstehend ausgebildet werden kann als in den **Figuren 2** dargestellt.

Vorzugsweise ist dabei der Bereich zwischen dem Produkt P und dem Hohlraum für das Sekundär-Produkt Ps nicht durchgängig mit Material gefüllt, sondern dazwischen sind nur Streifen oder Platten aus gehärteter Verpackungsmasse vorhanden.

Dadurch kann ein Kunde, der nach Öffnen der Verpackung und Entnehmen des Produktes in die Verpackung hineinsieht, erkennen, dass abseits des Produkt-Hohlraumes ein benachbarter Hohlraum existiert, in dem sich ein Sekundär-Produkt Ps befindet, welches er ebenfalls entnehmen kann.

Nach Auflegen der Abdeckplatte 9 auf den Rändern um den Hohlraum 6 herum wird diese Abdeckplatte 9 durch Aufbringen der nächsten Schicht aus Verpackungs-Masse, wie in **Figur 1e** dargestellt, fixiert und damit der Hohlraum 6 verschlossen, wie auch in **Figur 2e** von oben dargestellt. Nach dem auch das Produkt P selbst bedeckt ist von einer ausreichenden Anzahl von Schichten, die an der Oberseite eine ebene Fläche bilden, ist der Aufbau der Verpackungs-Hülle abgeschlossen.

**Figur 1f** zeigt alternativ, wie durch Überstehen der nächsten Schichten oberhalb des eingelegten Sekundär-Produktes Ps immer weiter zur Mitte des Hohlraumes 6 hin diese Schichten zum Schluss eine über dem Hohlraum 6 durchgehende Schicht ergeben ohne Abdeckplatte 9.

**Figur 1f** zeigt auch, dass zusätzlich oder statt der letzten Schicht der fertigen Kartonverpackungs-Hülle auch eine Kartonplatte 4 von oben aufgelegt und mit nach unten vorstehenden Karton-Laschen 4a in das noch weiche Material der obersten Schichten des Schichtaufbaus hineingedrückt werden kann, was jedoch schwer automatisierbar ist und manuelle Nacharbeit erfordern würde.

Auf die oberste Schicht kann nach oder auch schon vor dem Aushärten ebenfalls das Etikett 5 mit den Paket-Informationen aufgeklebt werden, wie in **Figur 2f** dargestellt.

Dort ist auch ersichtlich, dass eine Sollbruchstelle 8 in Form einer einkerbenden Nut zumindest auf den Seiten und der Oberseite der Verpackungs-Hülle eingearbeitet werden kann um das spätere Öffnen durch den Empfänger zu erleichtern.

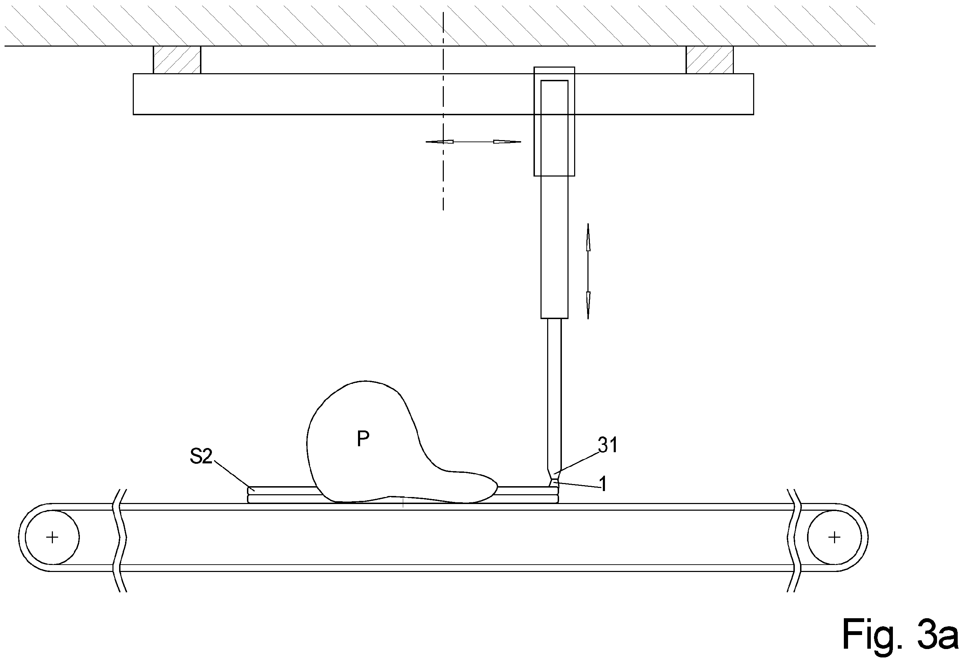

Die **Figuren 3a** bis **g** zeigen einen Aufbau ohne Basisplatte 3, wobei das Produkt auf das Förder-Band 34 des Zuförderers 33 aufgelegt und in den Wirkbereich der Ausbringungs-Düse 31 verfahren wird. Dann wird anschließend der schichtweise Aufbau der Verpackungs-Hülle um das Produkt P herum durchgeführt, was in der Aufsicht betrachtet eine bessere Anpassung der Form der entstehenden Verpackungs-Hülle an die in der Aufsicht betrachtete Form des Produktes ermöglicht.

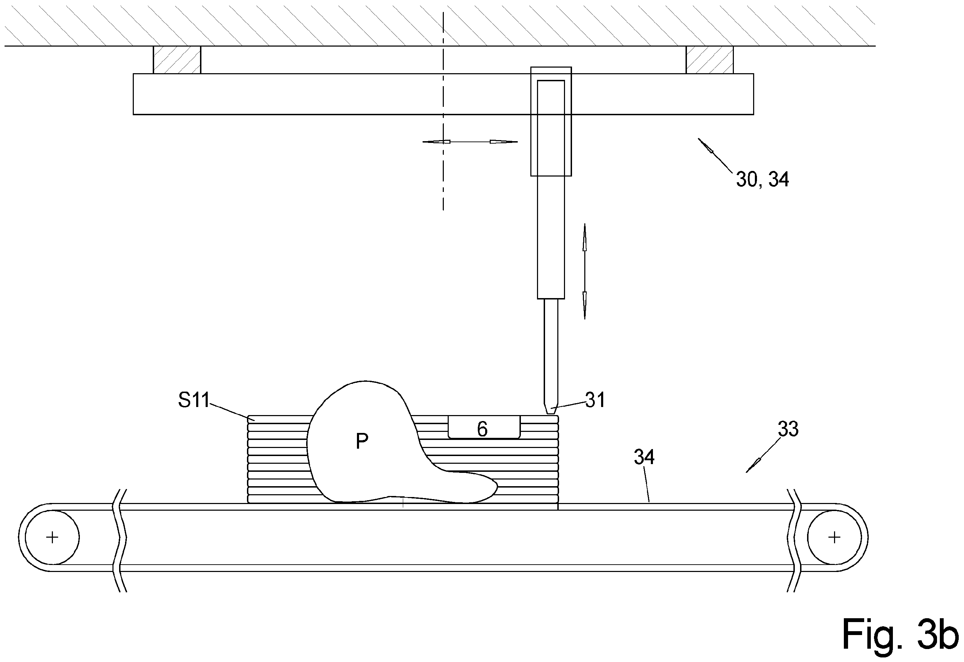

Der Beginn kann jedoch auch so gestaltet werden, dass zunächst ein oder zwei Schichten S1, S2 der Verpackungsmasse 1 ohne Produkt auf der Aufbaufläche 32 aufgebracht werden, dann auf diese Basis erst das Produkt P aufgelegt wird - manuell oder mit Hilfe eines gesteuerten Pickers, etwa eines Saugers, der das Produkt P aus einem Vorrat in seinem Greifbereich holen kann - und nach Auflegen des Produktes P auf dieser Basis der schichtweise Aufbau fortgesetzt wird wie in **Figur 3b** ersichtlich.

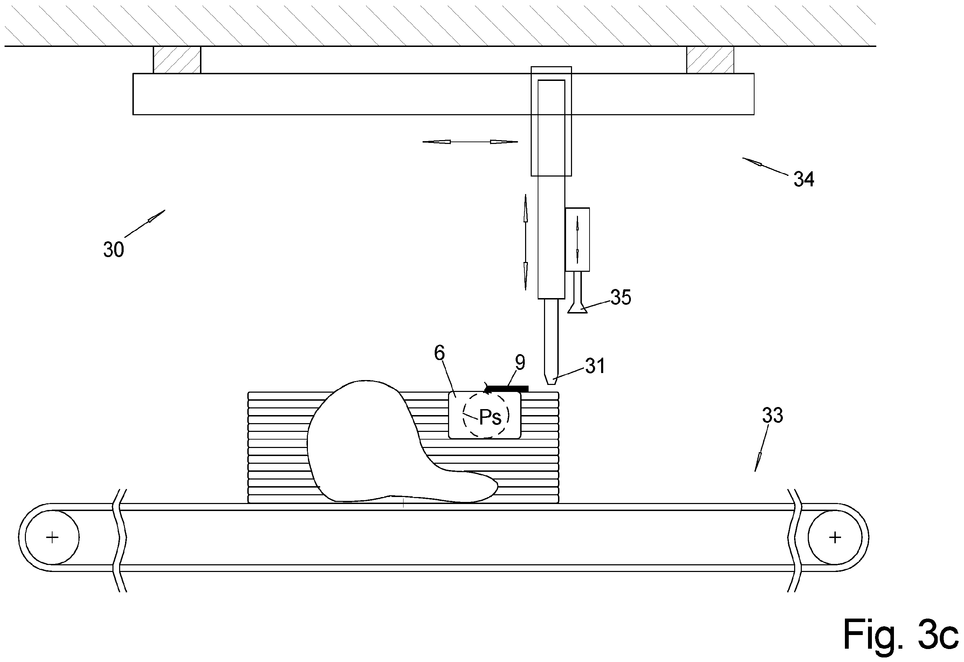

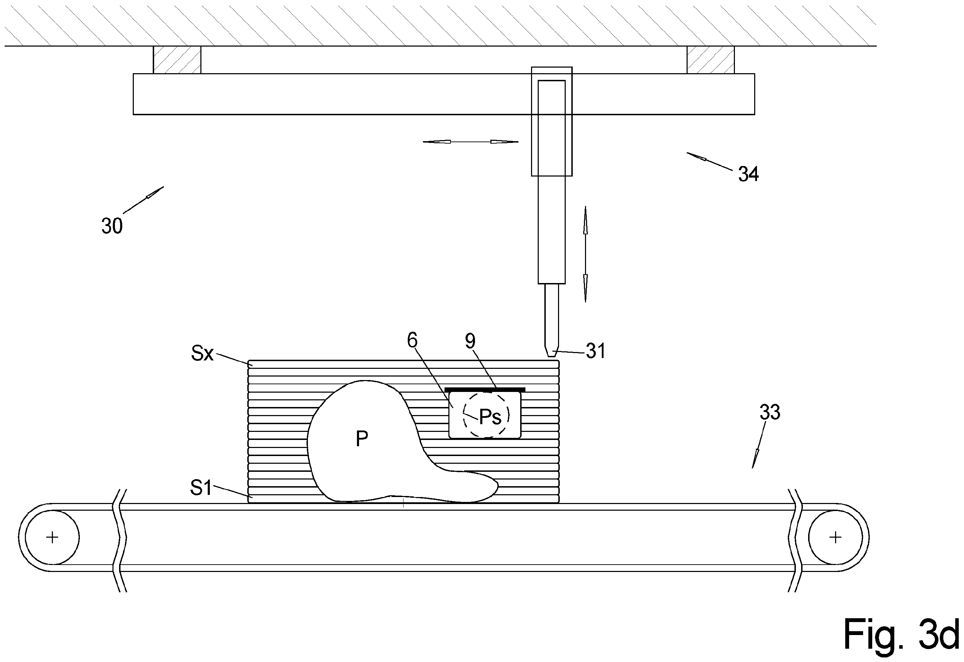

Dort wiederum mittels des beginnenden Aufbaus eines Hohlraumes 6, der in **Figur 3c** mit einer darübergelegten Abdeckung 9 bereits verschlossen wird bis gemäß **Figur 3d** auch das Produkt P ausreichend dick mit Verpackungs-Masse 1 bedeckt ist gemäß **Figur 3d****.** Auf die ebene Oberseite der fertigen Verpackungs-Hülle kann dann wiederum ein Etikett 5 aufgebracht werden.

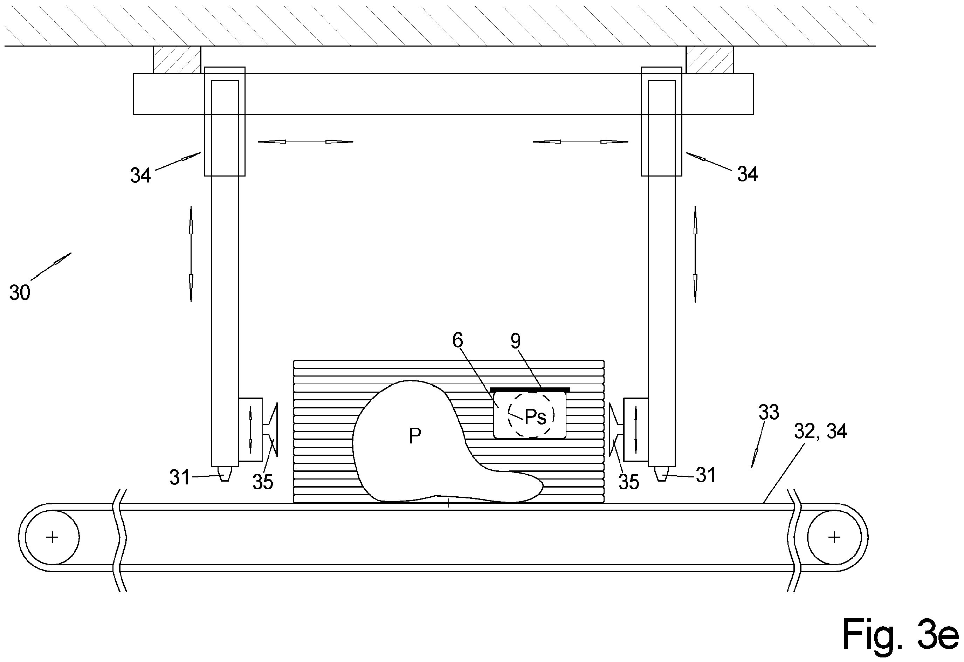

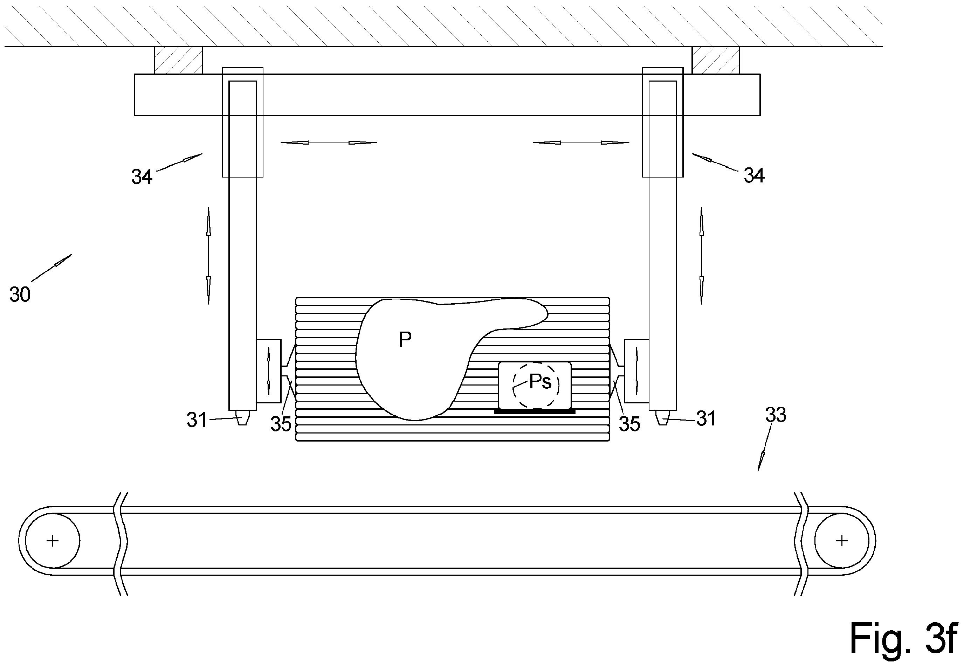

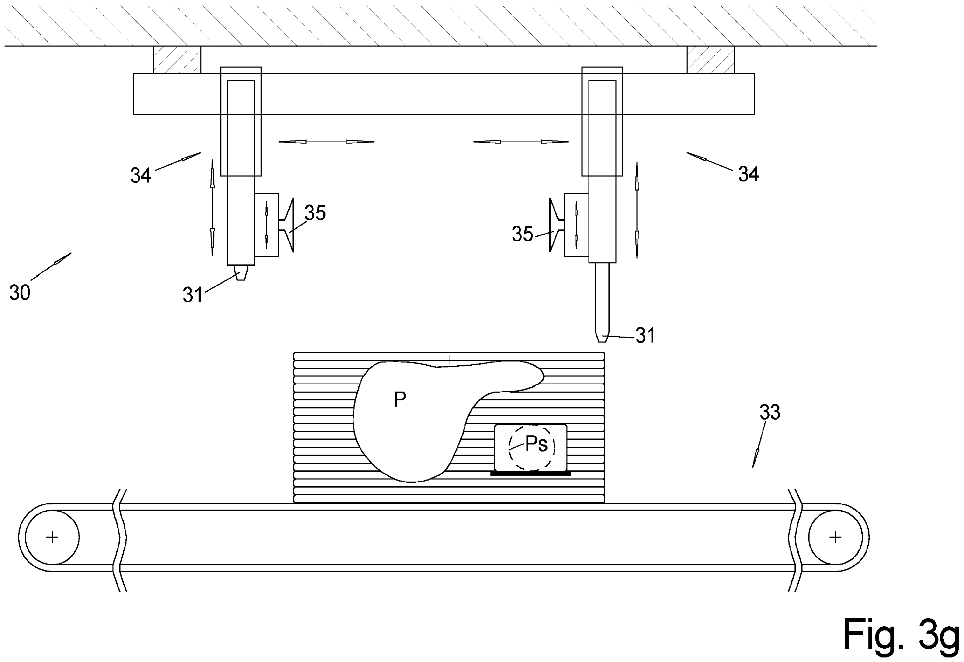

Falls am Beginn das Produkt P direkt auf die Aufbaufläche 32 aufgesetzt wurde und damit in der Unterseite der Verpackungs-Hülle sichtbar und zugänglich und ungeschützt wäre, kann gemäß **Figur 3e** ein so aufgebauter Schichten-Block nach Fertigstellung auf seiner Oberseite von beidseitigen Grippern 35 - wovon in diesem Fall wohl zwei vorhanden sein müssten - ergriffen werden, von der Aufbaufläche 32 abgehoben und so gedreht werden, dass sich die bisherige Unterseite oben befindet gemäß **Figur 3f** und dann wieder auf der Aufbaufläche 32 abgesetzt werden gemäß **Figur 3g****.**

Dann können auf die bisherige Unterseite des Verpackungs-Blocks und des Produktes P weitere Schichten als das Produkt P schützende Unterseite aus Verpackungs-Material 1 aufgebracht werden mittels der Düse 31.

Dabei kann der eine Gripper 35 an dem Halter der Düse 31 befestigt werden, der andere vorzugsweise an einem analogen weiteren Halter, der allerdings auch eine weitere Ausbringungs-Düse 31 tragen kann, was den Aufbau der Verpackung beschleunigt, sofern beide Düsen 31 unabhängig voneinander steuerbar sind.

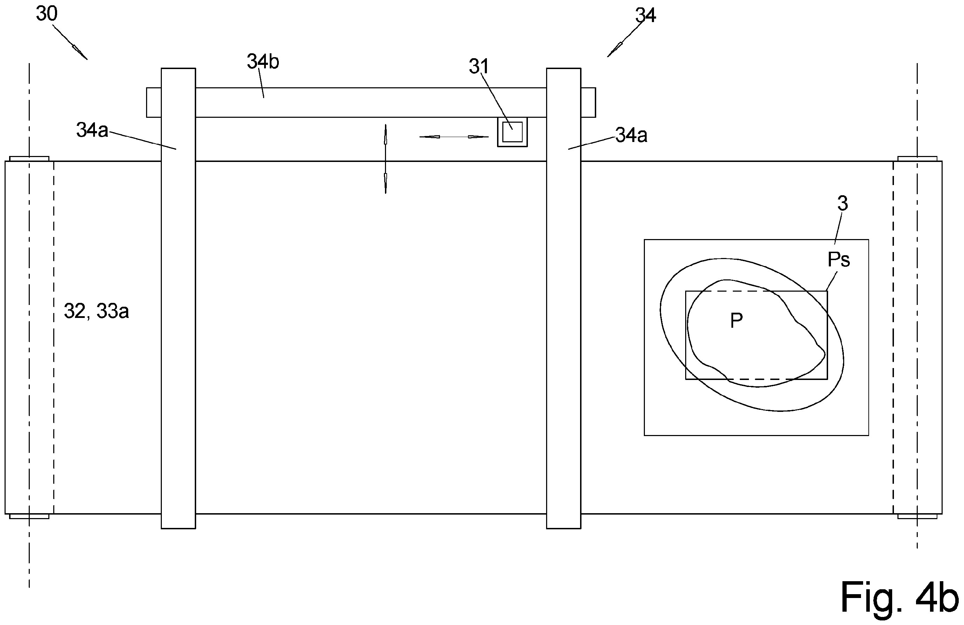

Die **Figuren 4a** bis **d** zeigen den Aufbau einer Verpackungs-Hülle auf dem gleichen Zuförderer 33 wiederum beginnend mit einer Basisplatte 3, die in diesem Fall wiederum rechteckig ist, während das Produkt P in der Aufsicht birnenförmig oder etwa elliptisch ist, wie in der Aufsicht der **Figur 4b** zu erkennen.

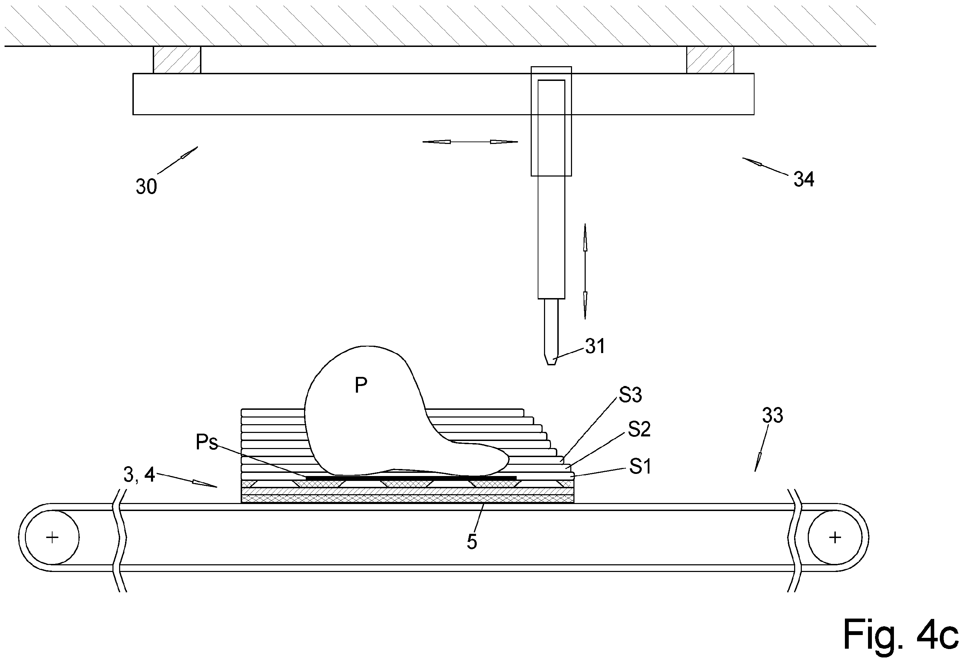

In diesem Fall ist die oberste Schicht der Basisplatte 3 eine Kartonplatte 4 mit Durchbrüchen, die vorzugsweise unten breiter sind als oben und damit eine Hinterschnitt bilden, in dem sich die erste auf der Basisplatte 3 aufgebrachte Schicht S1 verhaken kann, wie **Figur 4c** erkennen lässt.

Das Ziel ist in diesem Fall nicht das Herstellen einer quaderförmigen Verpackungs-Hülle, sondern einer Verpackungs-Hülle, die lediglich auf der Unterseite eben ist - etwa durch die dargestellte Basisplatte 3 oder auch durch vor Auflegen des Produktes aufgebrachte ein oder mehrere Schichten aus Verpackungs-Masse - die auf der Unterseite dieser Verpackungs-Hülle, also zur Aufbaufläche 32 hin, bereits ein Etikett 5 tragen kann, und unter dem Produkt P auch ein Sekundär-Produkt Ps wie etwa eine Bedienungsanleitung.

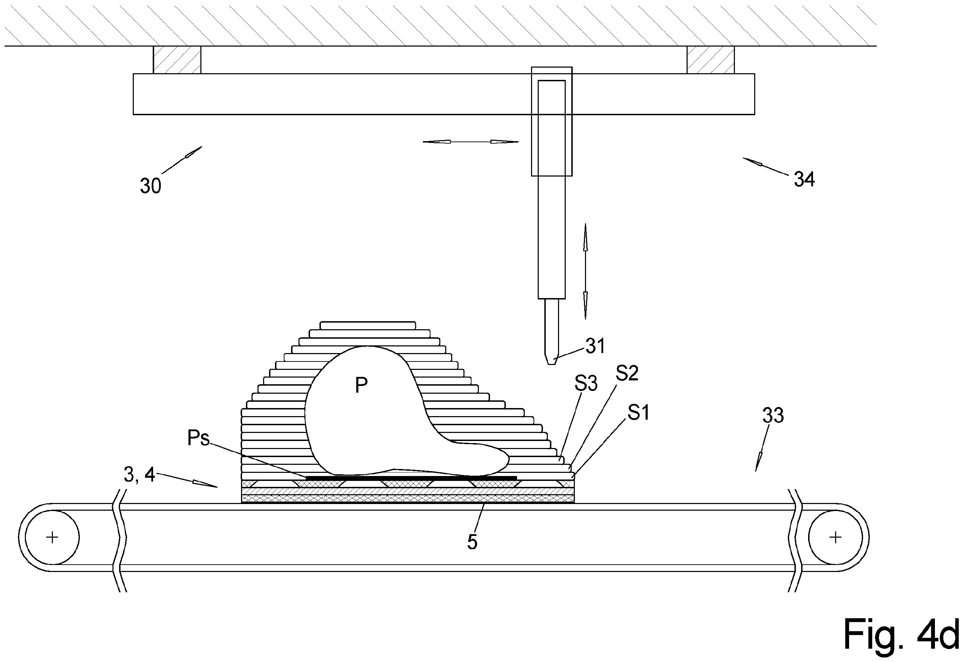

Abhängig vom seitlichen in der Aufsicht betrachteten Überstand der Basisplatte 3 über das Produkt P können mit zunehmender Schichtzahl die Ränder der Schichten von den Rändern der Basisplatte 3 immer mehr in Richtung der in der Aufsicht betrachteten Mitte der Basisplatte 3 zurückweichen, oder erst ab einer bestimmten Aufbauhöhe, je nachdem was notwendig ist, um um das Produkt P herum eine ausreichende Dicke der Verpackungs-Hülle sicherzustellen, wie der **Figur 4d** entnehmbar.

Einen solche kuppelförmige oder halbkugelförmige Verpackungs-Hülle spart gegenüber einer quaderförmigen Verpackungs-Hülle einiges an Verpackungs-Masse 1, jedoch sind wegen der nicht quaderförmigen Form ein Stapeln und Schichten solcher Verpackungs-Hüllen nicht mehr möglich.

### BEZUGSZEICHENLISTE

- 1: Verpackungs-Masse
- 2: Verpackungs-Masse
- 3: Basisplatte
- 4: Kartonplatte
- 5: Etikett
- 6: Hohlraum
- 7: Verstrebung
- 8: Sollbruch-Stelle
- 9: Abdeckplatte
- 10: Transportrichtung
- 11: horizontale Querrichtung
- 12: Vertikale

- 20: fertige Verpackungs-Hülle
- 20a: Unterseite
- 20b: Oberseite

- 30: Umhüllung-Vorrichtung, 3D-Drucker
- 31: Ausbringungsdüse
- 32: Aufbaufläche
- 33: Produkt-Förderer
- 33a: Förderband
- 34: Düsen-Führung
- 34a: Quer-Führung
- 34b: Längs-Führung
- 35: Picker

- d: Dicke
- P: Produkt
- Ps: Sekundär-Produkt
- S1, S2: Schicht

## Patentansprüche

1. **Verfahren** zum Versand-Verpacken eines Produktes (P) durch
- Umhüllen des Produktes (P) ohne umgebende Form mit einer aushärtbaren Verpackungs-Masse (1),
- Aushärten der Verpackungs-Masse (1) am Produkt (P),
**dadurch gekennzeichnet, dass**
- das Aufbringen der Verpackungs-Masse (1) in mehreren, ebenen Schichten (S1, S2....) nacheinander erfolgt,
- insbesondere in einem iterativen Verfahren.

2. Verfahren nach Anspruch 1,
**dadurch gekennzeichnet, dass**
dass die Verpackungs-Masse (1)
- eine spritzfähige Masse ist
und/oder
- eine nicht-aufschäumende Verpackungs-Masse (1) ist und/oder
- aus recyceltem Papier- oder Karton-Material besteht.
(ebene Oberseite:)

3. Verfahren nach einem der vorhergehenden Ansprüche,
**dadurch gekennzeichnet, dass**
die letzte aufgebrachte Schicht (Sx) eine ebene Oberseite besitzt.
(Basis:)

4. Verfahren nach einem der vorhergehenden Ansprüche,
**dadurch gekennzeichnet, dass**
- entweder zuerst eine oder mehrere Boden-Schichten (S1, S2) als Basisplatte (3) hergestellt werden und zumindest teilweise ausgehärtet werden,
- oder es wird eine Kartonplatte (3) als Basisplatte (3) verwendet,
- dann wird das Produkt auf die Basisplatte (3) aufgesetzt und mit weiteren Schichten (S3, S4) an den Seiten und der Oberseite mit der Verpackungs-Masse (1) umhüllt.

5. Verfahren nach einem der vorhergehenden Ansprüche,
**dadurch gekennzeichnet, dass**
- das Produkt (P) zunächst an den Seiten und der Oberseite mit der Verpackung-Masse (1) umhüllt wird,
- danach das Produkt (P) mit der bisherigen Verpackung um 180° gewendet wird, sodass es mit der ebenen Oberseite der zuletzt hergestellten Schicht (Sx) auf dem Untergrund liegt,
- anschließend die bisherige Unterseite des Produktes (P) mit Verpackungs-Masse (1) bedeckt und das Produkt vollständig umhüllt wird.

6. Verfahren nach einem der vorhergehenden Ansprüche,
**dadurch gekennzeichnet, dass**
- für die Verpackung eine minimale Dicke (d) der Verpackungs-Masse (1) an jeder Stelle der Oberfläche des Produktes (P) vorgegeben und eingehalten wird
und/oder
- die Umhüllung so erfolgt, dass die fertige Versand-Verpackung (20) zumindest eine ebene Oberseite (20b) und dazu parallele ebene Unterseite (20a) aufweist, insbesondere die fertige Verpackungs-Hülle (20) einen Kubus bildet.

7. Verfahren nach einem der vorhergehenden Ansprüche,
**dadurch gekennzeichnet, dass**
auf die letzte aufgebrachte Schicht (Sx)
- entweder ein Etikett (5) mit Paket-Informationen aufgeklebt wird oder die Paket-Informationen aufgedruckt werden wird
- oder eine Kartonplatte (4), insbesondere mit darauf befindlichen Paket-Informationen, aufgebracht wird, insbesondere mit Fortsätzen in die noch nicht völlig ausgehärtete letzte Schicht (Sx) eingedrückt wird.
(Innerer Aufbau:)

8. Verfahren nach einem der vorhergehenden Ansprüche,
**dadurch gekennzeichnet, dass**
- die Umhüllung mit verschiedenen Verpackungs-Massen (1, 2) mit nach dem Aushärten unterschiedlichen physikalischen Eigenschaften, insbesondere unterschiedlichen spezifischen Gewichten und/oder unterschiedlichen verschiedenen Elastizitäten, erfolgt
- insbesondere so, dass direkt anliegend am Produkt (P) (definieren) ausgehärtete Verpackungs-Masse (1) mit dem geringeren spezifischen Gewicht und/oder der höheren Elastizität verwendet wird.

9. Verfahren nach einem der vorhergehenden Ansprüche,
**dadurch gekennzeichnet, dass**
beim schichtweisen Aufbauen der Verpackungs-Hülle
- umschlossene Hohlräume (6) in der Verpackungs-Hülle, insbesondere abseits des Produktes (P), erzeugt werden,
- in welche wenigstens ein Sekundär-Produkt (Ps) eingelegt wird.

10. Verfahren nach einem der vorhergehenden Ansprüche,
**dadurch gekennzeichnet, dass**
Verstrebungen (7) in der Verpackungs-Hülle hergestellt werden, die
- entweder durch Hohlräume (6) in der Verpackungs-Hülle verlaufen
- oder von der Verpackungs-Masse umgeben sind,
- die Verstrebungen (7) insbesondere aus einer Verpackungs-Masse (2) bestehen, die sich im ausgehärteten Zustand hinsichtlich ihrer physikalischen Eigenschaften von der, insbesondere die Verstrebungen (7) umgebenden, Verpackungs-Masse (1) unterscheidet.

11. Verfahren nach einem der vorhergehenden Ansprüche,
**dadurch gekennzeichnet, dass**
- eine Sollbruch-Stelle (8), insbesondere eine linienförmige Sollbruch-Stelle (8), in der Verpackungs-Hülle zum leichteren Öffnen eingearbeitet und
- insbesondere die Sollbruch-Stelle (8) auf der Außenseite markiert wird.

12. Umhüllungs-**Vorrichtung** (30) in Form eines 3-D-Druckers (30) zur Durchführung eines Verfahrens nach einem der vorhergehenden Ansprüche, **dadurch gekennzeichnet, dass**
die Ausbringungs-Düse (31) des 3-D-Druckers (30) geeignet ist zum Ausbringen einer aushärtbaren Verpackungs-Masse (1, 2) aus recyceltem Papier- oder Kartonmaterial.

13. Umhüllungs-Vorrichtung nach Anspruch 12,
**dadurch gekennzeichnet, dass**
die Umhüllungs-Vorrichtung (30) eine Wende-Vorrichtung zum Wenden des bereits teilweise von ausgehärteter Verpackungs-Masse (1) umgebenen Produktes (P) aufweist.
